# NEW EUROPEAN PATENT SPECIFICATION

(11) **EP 1 285 198 B2**
(45) Date of publication and mention of the opposition decision: **26.02.2014**
(45) Mention of the grant of the patent: 15.11.2006
(21) Application number: 01928067.6
(22) Date of filing: 04.05.2001
(51) Int. Cl.: G02B 6/00

(54) **EDGE LIT ILLUMINATION DEVICE**
BELEUCHTUNGSVORRICHTUNG MIT KANTENBELEUCHTUNG
DISPOSITIF D'ÉCLAIRAGE PAR LA TRANCHE

(30) Priority: 19.05.2000 GB 0012003; 24.06.2000 GB 0015401
(43) Date of publication of application: 26.02.2003
(60) Divisional application: 06009018.0
(73) Proprietor: Lucite International UK Limited, Southampton, Hampshire SO14 3BP (GB)
(72) Inventor: ALLINSON, Heather, Darlington DL3 8JW (GB)
(74) Representative: Walsh, David Patrick
(86) International application number: PCT/GB2001/001973
(87) International publication number: WO 2001/088432

(56) References cited:
- EP-A1- 0 528 196
- EP-A1- 0 561 329
- EP-A1- 0 893 481
- EP-A1- 1 022 115
- EP-A2- 0 461 488
- EP-A2- 0 504 910
- EP-A2- 0 656 548
- EP-A2- 0 893 708
- WO-A1-01/66644
- WO-A1-01/88432
- JP-A- 11 352 312
- US-A- 4 373 282
- US-A- 4 373 282
- US-A- 4 385 343
- US-A- 4 876 311
- US-A- 5 359 155
- US-A- 5 408 388
- US-A- 5 649 754
- US-A- 5 671 994
- US-A- 5 844 720
- US-A- 6 027 221
- US-A- 6 036 327

## Description

The present invention relates to edge lit illumination devices and, in particular, edge lit illumination devices with roughened surfaces. Numerous applications for edge lit illumination devices are known. Edge lit illumination devices include illuminated display units or signs, lap top computer screens, LCD display back lighting, road signs, street furniture, advertising units, illuminated shelving, internal lighting of appliances such as illumination of the sides, back, or top of fridge units including display fridges, wine chillers/coolers. Edge lit illumination devices also include appliance fronts and fascias such as dial and control knob panels.

Edge lit devices utilise numerous light sources including planar light sources and curved light sources.

Generally, the illumination device includes a light source located adjacent to a light transmission element. The light transmission element includes a light output surface and at least one light ingress edge adjacent to the light source so that light from the light source enters the transmission element via the said edge to propagate through the element.

Many attempts have been made at modifying the roughening at the surface of the light transmission element so that the light propagating through the transmission element escapes through the surface. The light transmission element typically acts as a display window with the material to be displayed located behind, in front of, or on the actual surface itself.

For instance, DE 2356947 discusses the possibility of providing what is said to be finely roughened or frosted parts of the surface. However, the fine roughening is employed so as to avoid the possibility of coarse roughening impairing the transparency of the unit. The light output of this material is discussed in DE 3223706 and is said to be insufficiently uniform across the sheet so that increasing density of roughness with increasing distance from the light source is required.

DE3223706 discloses the benefit of increasing the density of roughening with increasing distance from the light source in order to increase output which naturally falls across the plate.

US 4385343 discloses an edge lit product, including acrylic material as the light transmitting body, which has both surfaces of the light transmitting body roughened. The distribution of the light on the light egress face surface can be attained by selecting an appropriate angular relation between the backing material reflecting surface and the surface of the sheet when they are spaced apart or by tapering of the light transmitting body which is convergent in the direction away from the light ingress edge surface. Plane parallel faces are also shown. The document indicates that the plane parallel faces arrangement of figure 7 is only adequate if the edge lit sign is relatively small. The method of application of the roughness is by abrasion using a flapper wheel with strips of sandpaper attached or by cutting the surface of the transparent plate. The cutting device is said to give a cut into the surface of the transparent material between 5/1000 of an inch and 100/1000 of an inch. The document indicates that there is a falling away of light with distance from the light source and that the solution to this problem is to vary the thickness or to converge the plate with increasing distance. It also discusses the possibility of angling the plate if spaced from the light source.

US 3497981 solves the problem of light egress in a similar manner to US 4385343. The manner by which the roughness is applied to the rod includes chemical etching as well as sandblasting. The document discloses that it is necessary to use differential etching in order to have sufficient light output in anything other than small letters.

US 5625968 does not relate to surface roughness but the application of a dot matrix pattern to allow egress of light from within the sheet. The dot matrix pattern is preferably of increasing density towards the centre of the sheet and away from the light source.

GB 2161309A again solves the problem of light egress by increasing the coarseness of the roughness away from the light source.

GB 2211012 discloses an edge illuminated display aid which includes the display element 63 of transparent material to produce a scattering, which treatment is intentionally increased in severity or optical density with increasing distance from the light source 62.

GB 2164138 relates to a light diffusing device and an illumination apparatus employing the light diffusing device. The diffusing layers are provided with thicknesses which are different from each other or, otherwise, arranged to have a density which varies along the device, thereby illuminating a desired object uniformly as a whole.

GB 2196100 discloses a light diffusing device which includes a light diffusion layer 3 but also a light reflecting film 7 which decreases reflectivity with increasing distance from the light source b, c and thereby provides an even distribution of light from the light diffusion layer 3 on to the light diffusing plate 6. The document discusses the problem with edge lit frosted glass plates or opal glass plates in that they fail to evenly illuminate the entire surface of the light diffusing plate.

US 4059916 relates to edge lit products with a roughened rear surface and a reflecting layer generally against the rear surface. The effect of the roughened surface is to increase the light reflected through the front surface. The roughening is described as grooves and ridges across the surface. The document discusses the advantages in thinning the sheet with increasing distance from the light source.

PCT WO84/04838 discloses a display device whereby both the upper and lower surfaces may be roughened by nailing, blasting or stamping. The document also addresses the problem of decreasing light with increasing distance from the light source and this problem is solved by using a convex rear surface so that the plate is progressively thinner with increasing distance from the light source.

EP 0561329 discloses an edge lit light display device having light sources along all four side edges. The document also envisages the possibility that the density of the roughness of the dots applied to the surface may be uniform in one direction. The document teaches that it is necessary to have variation in density in the other direction in order to have uniform brightness.

US 5649754 discloses a combination of two types of roughening. It also discloses the possibility that there is an underlying uniform roughness. To solve the problem of achieving uniform brightness across the surface, a further layer is applied to the uniform layer. The document discloses that the roughness may be applied by sandblasting and is thus relatively coarse.

US 4 373 282 discloses a light diffusing device consisting of a plate with a roughened surface having deep depressions which are then partially filled with an optically transparent liquid to form shallow depressions.

The above documents show a clear trend towards the provision of either varying density surface features to provide uniform brightness across the light output surface or varying transmission plate thickness to maintain light output. Such techniques are difficult and expensive to apply to the surface or the sheet. Furthermore, each application requires its own optical characteristics and, therefore, in the case of density variations, it is necessary to specifically vary the roughness density in relation to specific products. Accordingly, each product is typically customised thus further increasing expense.

According to a first aspect of the present invention there is provided an edge lit illumination device as claimed in claim 1.

By uniformly roughened is meant that the level of roughness does not generally increase or decrease with increasing distance from the light source. However, there may be small localised variance in the roughness due to the inherent variance in the process or the means by which roughness is applied. However, such variance would be random and would exist across the whole surface and would not create any particular trend across the whole of the output surface.

The transmission element maintains substantially uniform thickness with increasing distance from the light source.

Typically, the average Ra value across the output surface of the transmission element is less than 0.75µm/mm thickness, more preferably less than 0.40µm/mm thickness, most preferably less than 0.30µm/mm thickness. Especially preferred average Ra values for rough surfaces on transmission elements are less than 0.15µm/mm.

The average Ra value across the surface of the transmission element is found within the range 0.01-1.0µm/mm thickness of element, preferably 0.02-0.75µm/mm thickness of element, most preferably 0.02-0.40µm/mm thickness of element. Especially preferred is an average Ra value in the range 0.05-0.30 µm/mm.

For example, on a 10mm thick sheet the average Ra value may be 1.8µm, whereas equivalent uniformity of output with a 5mm thick sheet may be obtained with an average Ra value of 0.9µm. In both cases, the average Ra value would be 0.18µm/mm thickness of sheet. Similarly, if more than one surface is roughened the Ra values may be additive so that a roughness of 0.9µm on the upper and lower surface of a 10mm sheet would also give an average Ra value of 0.18µm/mm thickness of sheet.

Preferably, roughening is applied to one or more light output surface(s). However, in addition to roughening of a front surface roughening of a back surface with or without a reflector to redirect light to an output surface is also envisaged.

Localised fluctuation in the surface Ra value may be between 0.01µm-1.0µm, preferably, between 0.05µm-1.0µm, more preferably 0.1µm-0.8µm, most preferably, 0.2µm-0.6µm.

For example, the surface roughness may be between 0.9-1.3µm for a Type A surface having 5-10mm thickness. However, if the average surface roughness is 1.1µm, this will be so across the surface and any fluctuation will be substantially random and will not create a defined variation in density across the surface.

It is possible to apply roughness to both a first light output surface and a second light output surface which may be spaced from and opposite the first on the opposed side of the transmission element and, in such cases, the Ra value/mm would be taken to be the sum of the two average Ra values divided by the overall thickness of the sheet.

As mentioned above, the invention may be put into effect by applying roughening on one surface of the transmission element or, where the element is a sheet of material, on both surfaces thereof. In addition, a plurality of sheets may be in superposed relationship and roughening may be applied to the outer faces of the superposed sheets, the inner mating faces or any combination of inner faces and outer faces.

Preferably, the drop-off of light output across the surface is less than 4000 lux, more preferably, less than 3000 lux, most preferably less than 2000 lux.

Preferably, the initial drop-off measurement is taken from a position of at least 50mm in from the edge of the element, more preferably, at least 100mm in from the edge, most preferably at least 150mm in from the edge of the element. The final reading may be taken from equivalent points in relation to the opposite edge of the element.

However, the drop-off is the measured fall in light output from the initial measurement to the output low-point across the sheet.

In a single edge lit product, this low point will be where the final measurement is made at the opposite edge of the element but in a multiple edge lit product, the low point will typically be that point most distant from the edges where the light sources are formed and this will typically be in the middle of the element, assuming equivalent output edge lights. It is envisaged that the drop-off may be negligible and may also be negative so that an increase in light output is found across the sheet with increasing distance from the light source.

Preferably, the transmission element is a sheet of, preferably, transparent material although optionally, translucent material.

Typically, the transmission element is a rectangular sheet which may be square. However, the sheet may be of any shape, for example round, square, rectangular, triangular, cylindrical, irregular.

The sheet may be made from any suitable plastic material, preferably acrylic material is used. Preferred materials may be selected from polymethyl methacrylate, polyethyl methacrylate, polypropyl methacrylate, polybutyl methacrylate, polyglycidyl methacrylate, polyisobornyl methacrylate, polycyclohexyl methacrylate either as homopolymers or as copolymers of at least one preceding polymer including such copolymers containing a minor proportion of another monomer selected from at least one C₁₋₄ alkyl acrylate. Preferably, polymethyl methacrylate is used.

Preferably, the transmission element is less than 3000mm in the dimension perpendicular to or away from the light source edge, more preferably, less than 2000mm in this width dimension, most preferably, less than 1500mm in this width dimension.

Preferably, the transmission element is less than 100mm in thickness, more preferably, less than 50mm in thickness most preferably, less than 30mm in thickness.

Typically, the range of thicknesses of the transmission element is 1-100mm, more preferably, 1-50mm, most preferably, 3-25mm.

As claimed, methods of making the transmission element are selected from cast polymerisation, moulding, extrusion and embossing and coextrusion.

The embossing of an extrusion sheet may take place during or after manufacture. Roughening on the surface layer of the co-extruded material may be effected by suitable matting or gloss-control agents. Suitable matting or gloss-control agents to cause sufficiently fine roughening on the surface layer of co-extruded material are known in the art of co-extruded materials. Suitably fine frosting of glass to produce the level of roughness required during casting is available and known in the art of glass manufacture. An example of such casting glass is available from Pilkington UK plc.

Preferably, the transmission element corresponds to the length of the light source in the dimension parallel with the light source or along the light source edge of the element. The transmission element may also be marginally longer than the light source in this dimension. Preferably, the light source is elongate.

Typically, the transmission element is between 100mm and 3000mm long in the dimension perpendicular to or away from the light source edge, more preferably between 200mm and 2000mm long in this dimension, most preferably between 300mm and 1500mm long in this dimension. Especially preferred is a width in this dimension of between 400 and 1200mm.

Usage for the invention includes illuminated display units or signs including lap top computer displays and LCD display back lighting, road signs, street furniture, advertising units, appliance fronts and fascias, such as dial and control knob panels, internal lighting of appliances such as illumination of sides, back and top of fridge units, display fridges, wine chillers and coolers.

The light sources may be straight or curved as may the edges of the transmission element. Preferably, the light sources are planar. Any suitable light source may be used but suitable light sources include fluorescent tubes, cold cathode tubes, neon tubes, LED's conventional and organic, fibreoptics and light bulbs.

Preferably, fluorescent tubing is used. The diameter of the fluorescent tube may vary from typically 6mm, commonly referred to as T2, to 25mm. The distance from the edge of the light transmitting panel to the crest of the tube is preferably between 1 and 2mm. In an alternative embodiment the fluorescent tube is an aperture tube. This type of tube has coated on the inside wall of the glass a reflective coating with a fluorescent coating on top of it. The aperture is a part of this tube, for example 30° of the 360° around the inside of the tube, with no coating. This opening runs the length of the tube and is arranged so it is directing light from the light source at the edge of the light transmitting sheet. A reflector is typically positioned behind each fluorescent tube and may be any material capable of reflecting light, for example mirrored aluminium. Preferably, the light transmitting sheet is in a fixed relationship to the light source.

By way of illustration only, the invention will now be described with reference to the accompanying, non-limiting examples and with reference to figures 1-5 in which:-
Figure 1 shows a comparison of light output vs position across the sign for single and double sided type B and single sided type A roughened surfaces.
Figure 2 shows a comparison of light output vs position across the sign for double sided type A and Prismex.
Figure 3 shows a comparison of light output vs position across the sign for double and single sided type A and single sided type B.
Figure 4 shows a comparison of light output vs position across the sign for double sided type A and multiple single sided type A;
Figure 5 shows a comparison of light output vs position across the sign for co-extruded type A and Prismex; and
Figure 6 shows an edge lit display using a sheet in accordance with the invention.

The surface texture of the roughened surfaces has been defined by means of a Ra parameter. ISO 4287 and 4288 describe the recommended procedures for determining Ra and other statistical parameters. Measurements were made using a TALISURF meter. For convenience, those surfaces with Ra in the range 0.9-1.3 are denoted as Type A and those surfaces with an Ra in the range 1.3-1.8 are denoted as Type B. Gloss measurements were made using an Erichson mini glossmeter 507-M (85e). The equivalent gloss values for Type A surfaces are 24-30% and for Type B surfaces 14-22%. The roughness can be considered as a higher frequency surface effect superimposed on top of waviness and form. The roughness is usually described by Ra or similar parameters which is within a 10µm vertical range. The afore mentioned ISO standards describe the recommended sampling links and cut off values for making measurements. For instance, for a periodic profile of 4mm (upper limit of the range), the cut off value is 8mm and sample length is 40mm. This is for an Ra value of around 10µm.

### Experimental details

The examples use a rectangular sheet of thickness range 3mm - 25mm made from clear cast polymethylmethacrylate which has one or two frosted or matt surfaces. The frosted surface was made by cast polymerisation against an etched glass plate. The frosted surface is characterised by gloss measurements and by surface roughness measurements.

Gloss measurements were made using an Erichsen Mini Glossmeter 507-M measuring the percentage of reflected light at an angle of 85 degrees. For Type B gloss measurements were in the range 14 - 22%, for Type A this increases to 24 - 30%.

Roughness measurements (Ra, microns) were made using a Surtronic 3P Talisurf meter supplied by Rank-Taylor-Hobson. This is calibrated against a reference tile before use. The reference used is a rough metal tileplate (240 micro inches) with the meter in calibration mode. The Ra of the sample is measured directly. For the samples used in the examples, Type B has an Ra value in the range 1.3 - 1.8µ, whilst Type A has an Ra of 0.9 - 1.3µ. (The range of values is due to variability in the roughness of glass used for casting and also due to wear of the glasses during repeated use through their lifetime.

All roughened surface panels were made from acrylic cast against frosted glass, two different degrees of frosting being used to achieve Type A and Type B finishes. The chosen panel is placed in a framework that forms the sign, light sources are placed adjacent to the input edge of the panel. In the examples two light sources have been used on opposing edges of the panel.

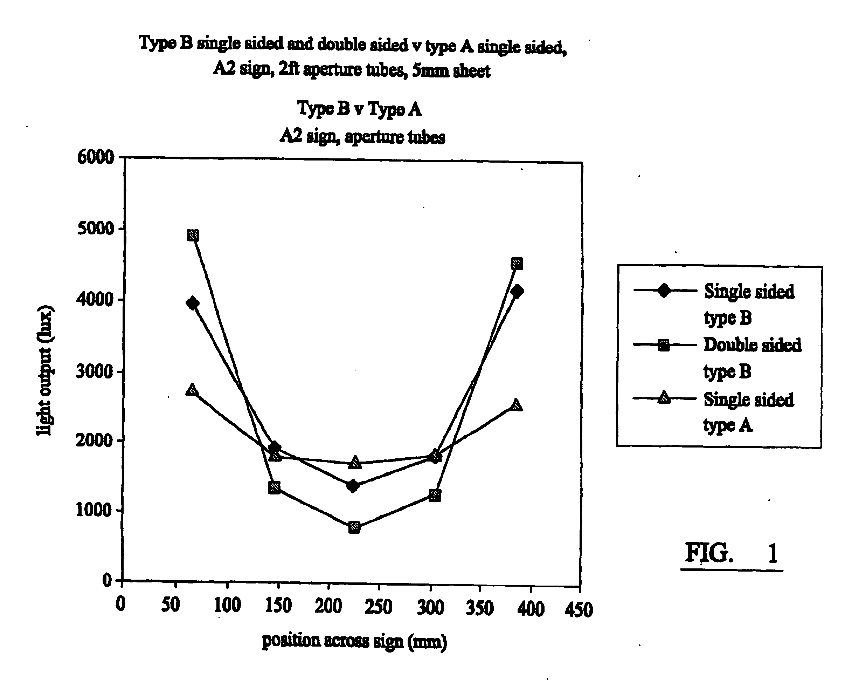

Light output measurements are made by placing a RS Digital Lightmeter (RS 180-7133) on the surface of the sign: An array of points are measured on the surface, and points equi-distant from a tube are averaged. These averaged values are displayed graphically in figure 1-5. Typically the light output with distance from one or both of the light input edges is recorded.

The samples were compared with Prismex from Ineos Acrylics UK Ltd, which is a successful product with a dot matrix printed surface to achieve improved light output.

### Examples

### 1. Type B single sided and double sided v Type A single sided, A2 sign, 2ft apertures, 5mm sheet (Figure 1)

Acrylic Panel dimensions: 635 x 455mm x 5mm thick
Light source: Philips TLD fluorescent aperture tube, 18 watts, colour rendering value of 85, colour temperature of 6500K, tube diameter 25mm.

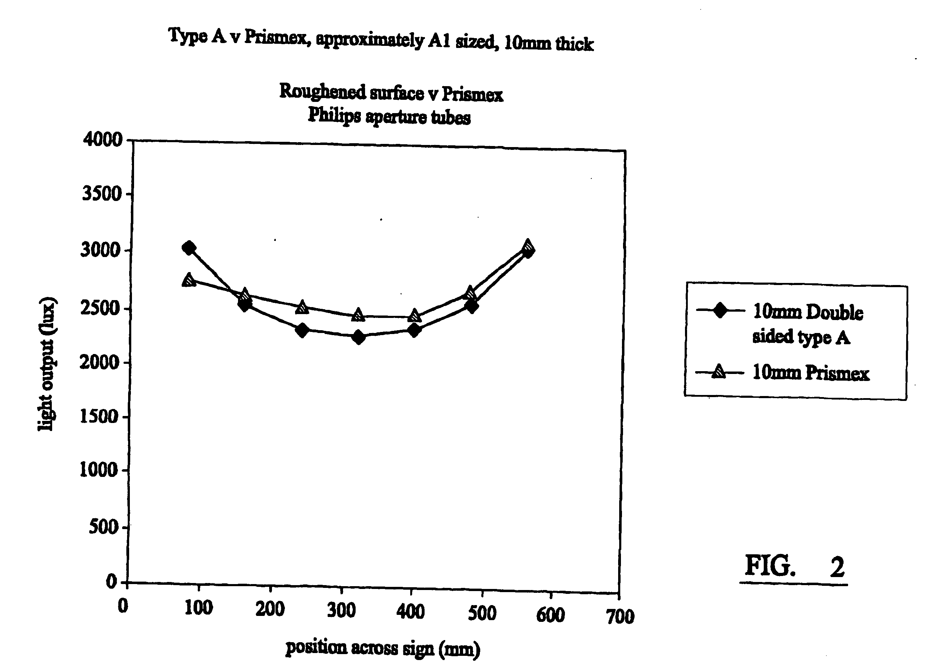

### 2. Type A v Prismex, approximately A1 sized, 10mm (Figure 2)

Acrylic Panel dimensions: 885 x 635mm x 10mm thick
Light source: 2 x Philips TLD aperture fluorescent tube, 30watts, colour rendering 85, colour temperature 6500K.

The Type A samples were produced from cast Type A sheet. The Prismex samples were made by screen printing an array of white dots onto opposing surfaces of clear cast acrylic sheet.

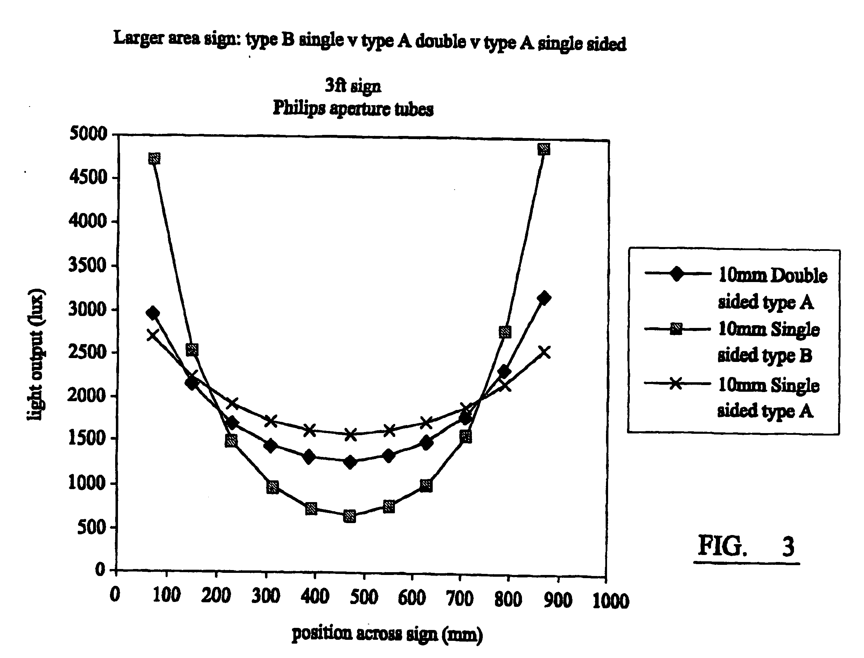

### 3. Larger area sign: Type B single v Type A double v Type A single (Figure 3)

Acrylic Panel size: 945mm x 865mm x 10mm thick
Light source: 2 x Philips TLD aperture tubes, 30W, etc.

This example shows that it is important to choose the correct surface roughness for the thickness of panel being used, but also the correct roughness for the panel dimension (length of panel between the two tubes in this case). In comparison with example 2 above where the optimal panel was a Type A surface on both sides, here a Type A surface on just one side is better when a longer path length is used. However the trends are the same, namely that the light output characteristics improve as the overall roughness of the panel is reduced.

3ft sign using various rough surface panels: experimental details as described previously.

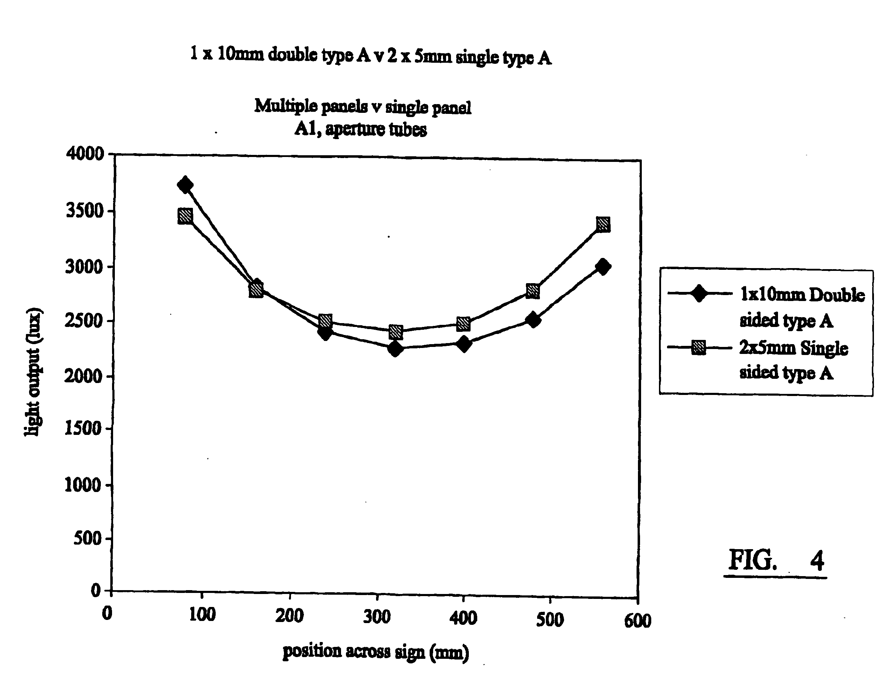

### 4. 1 x 10mm double Type A v 2 x 5mm single Type A (Figure 4)

### Panel dimension and light source as for example 2.

This example illustrates the point that multiple superposed thinner panels can be used to create the same output as a single thicker panel as long as the surface roughnesses of each are chosen appropriately. Here a 10mm panel with two Type A surfaces is compared with 2 panels 5mm thick with a single side of Type A on each. In the example the rough surfaces are on the outermost faces of the combination, however there is no measured difference when the rough surfaces are in other orientations.

Various data for Type A surfaces made by casting have been described above. As claimed, there are other methods of creating a rough surface. These include coextrusion and extrusion then embossing. Detailed here is an example of a coextruded Type A sheet used for edge lighting, where the Type A sheet has a single rough surface.

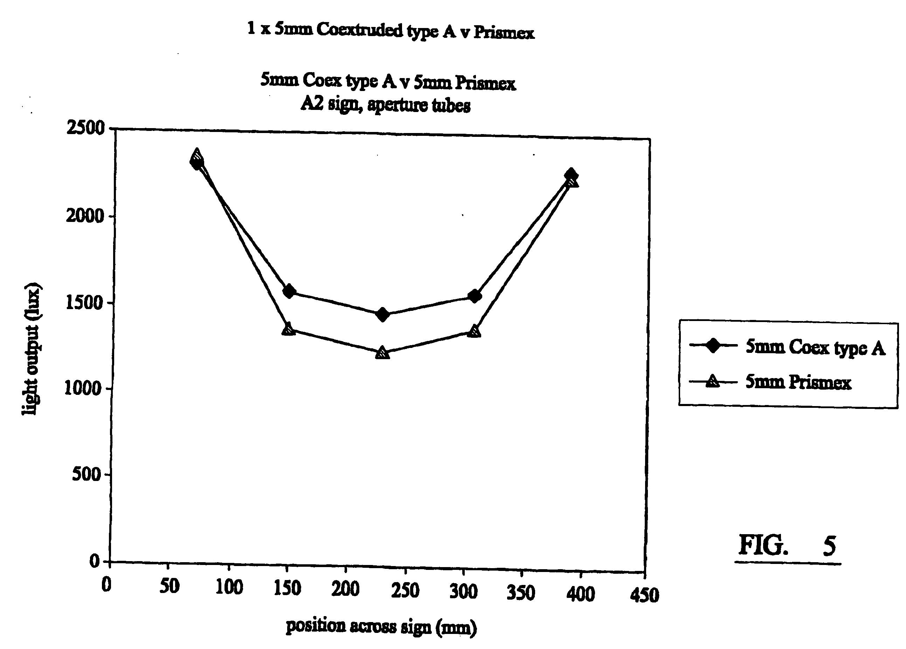

### 5. 1 x 5mm Co-Extruded Type A vs Prismex (Figure 5)

A2 sized sign, panel dimensions: 635 x 455mm x 5mm thick, coextruded Type A (Co-Extruded Type A).
Light source: 2 x Philips TLD fluorescent aperture tube, 18W.

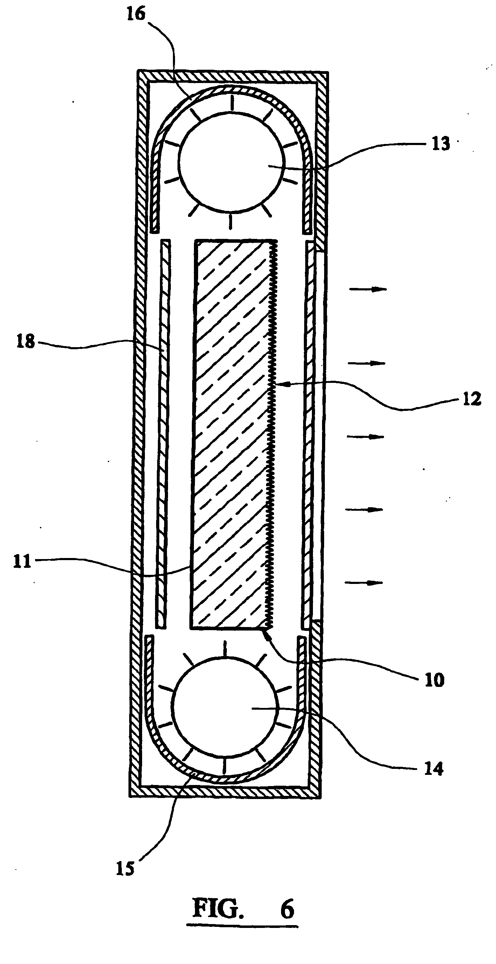

Specific embodiments of the invention will now be further described with reference to the accompanying drawing (Figure 6) which is a sectional view through an illuminated display system according to the invention and is illustrated to show an embodiment of the invention in use.

In Figure 6 the light transmitting sheet (10) is a 945 x 865 x 10mm clear cast polymethylmethacrylate (PMMA) sheet as exemplified by a type A surface single side which is untreated on the rear surface (11) but has a rough surface formed on its light output surface (12). The light sources are Philips TLD 30W/865 FA30 fluorescent tubes (13, 14) which both have a power output of 30 Watts, a colour rendering value (Ra) of 86, a colour temperature of 6500 Kelvin and a diameter of 25mm. These are each placed adjacent to an edge of the light transmitting sheet and surrounded by a mirrored aluminium reflector (15, 16). A further reflection sheet 18 is located adjacent to and parallel with the rear surface 11 to reflect light back towards the output surface 12 (the reflection sheet is shown spaced for illustration purposes although, in use, it would usually abut against the rear surface of the transmission sheet).

The reader's attention is directed to all papers and documents which are filed concurrently with or previous to this specification in connection with this application and which are open to public inspection with this specification.

## Claims

1. An edge lit illumination device comprising at least one light source(13,14);
a light transmission element(10) having at least one light output surface(12) and at least one light ingress edge substantially perpendicular to said surface(12), the light source(13, 14) being located adjacent to said light ingress edge so that light from the light source(13,14) enters the transmission element(10) via the said edge and propagates through the element(10), the said at least one light output surface(12) being uniformly roughened across the output surface(12), wherein the transmission element(10) maintains substantially uniform thickness with increasing distance from the light source(13,14), wherein the transmission element(10) together with the rough surface(12) is created by a method selected from cast polymerisation, moulding, extrusion and embossing, and co-extrusion **characterised in that** the roughening is sufficiently fine to give an average Ra value across the surface(12) of less than 1.0 µm/mm thickness of element 10 and within the range 0.01-1.0 µm/mm thickness of element(10).

2. An edge lit illumination device according to claim 1, wherein the average Ra value across the output surface of the transmission element is less than 0.75µm/mm thickness.

3. An edge lit illumination device according to any of claims 1-3, wherein the transmission element is a sheet and wherein roughness is applied to both a first light output surface and a second light output surface which may be spaced from and opposite the first on the opposed side of the sheet and, in such cases, the Ra value/mm would be taken to be the sum of the two average Ra values divided by the overall thickness of the sheet.

4. An edge lit illumination device according to any of claims 1-4, wherein a plurality of sheets is in superposed relationship and roughening may be applied to the outer faces of the superposed sheets, the inner mating faces or any combination of inner faces and outer faces.

5. An edge lit illumination device according to any of claims 1-5, wherein the transmission element is less than 3000mm in the dimension perpendicular to or away from the light source edge.

6. An edge lit illumination device according to any of claims 1-6, wherein the transmission element is less than 100mm in thickness.

7. An edge lit illumination device according to any of claims 1-7, wherein roughening on the surface layer of the co-extruded material is effected by suitable matting or gloss-control agents.

8. An edge lit illumination device according to any of claims 1-8, wherein the transmission element is between 100mm and 3000mm long in the dimension perpendicular to or away from the light source edge.

9. An edge lit illumination device according to any of claims 1-9, wherein the localised fluctuation in the surface Ra value is between 0.01µm-1.0µm.

## Patentansprüche

1. Beleuchtungsvorrichtung mit Kantenbeleuchtung, umfassend wenigstens eine Lichtquelle (13, 14);
ein Lichtübertragungselement (10) mit wenigstens einer Lichtausgabefläche (12) und mit wenigstens einer Lichteingangskante, welche im Wesentlichen senkrecht zur Fläche (12) liegt, wobei die Lichtquelle (13, 14) benachbart der Lichteingangskante angeordnet ist, so dass Licht von der Lichtquelle (13, 14) in das Übertragungselement (10) über die Kante eintritt und sich durch das Element (10) ausbreitet, wobei die wenigstens eine Lichtausgabefläche (12) gleichmäßig über die Ausgabefläche (12) aufgeraut ist, wobei das Übertragungselement (10) im Wesentlichen eine gleichmäßige Dicke mit wachsendem Abstand von der Lichtquelle (13, 14) beibehält, wobei das Übertragungselement (10) gemeinsam mit der rauen Fläche (12) durch ein Verfahren erzeugt wird, welches unter Gusspolymerisation, Spritzgussformen, Extrusion und Prägen und Co-Extrusion ausgewählt ist, **dadurch gekennzeichnet, dass** das Aufrauen ausreichend fein ist, um einen durchschnittlichen Ra-Wert über die Fläche (12) von weniger als 1,00 µm/mm Dicke des Elements (10) und innerhalb des Bereichs von 0,01-1,0 µm/mm Dicke des Elements (10) zu ergeben.

2. Beleuchtungsvorrichtung mit Kantenbeleuchtung nach Anspruch 1, wobei der durchschnittliche Ra-Wert über die Ausgabefläche des Übertragungselements weniger als 0,75 µm/mm Dicke beträgt.

3. Beleuchtungsvorrichtung mit Kantenbeleuchtung nach einem beliebigen der Ansprüche 1-3, wobei das Übertragungselement eine Platte ist und wobei Rauheit sowohl auf eine erste Lichtausgabefläche als auch auf eine zweite Lichtausgabefläche aufgebracht ist, welche von der ersten beabstandet und dieser gegenüberliegend auf der entgegengesetzten Seite der Platte sein kann und wobei in solchen Fällen der Ra-Wert/mm als die Summe der zwei durchschnittlichen Ra-Werte, dividiert durch die Gesamtdicke der Platte, angenommen wird.

4. Beleuchtungsvorrichtung mit Kantenbeleuchtung nach einem beliebigen der Ansprüche 1-4, wobei eine Mehrzahl von Platten sich in übereinandergelegter Beziehung befindet und Aufrauen auf die äußeren Flächen der übereinandergelegten Platten, die inneren Passflächen oder jede beliebige Kombination der inneren Flächen und äußeren Flächen aufgebracht werden kann.

5. Beleuchtungsvorrichtung mit Kantenbeleuchtung nach einem beliebigen der Ansprüche 1-5, wobei das Übertragungselement kürzer als 3000 mm in der Abmessung senkrecht zu oder weg von der Lichtquellenkante ist.

6. Beleuchtungsvorrichtung mit Kantenbeleuchtung nach einem beliebigen der Ansprüche 1-6, wobei das Übertragungselement weniger als 100 mm in der Dicke ist.

7. Beleuchtungsvorrichtung mit Kantenbeleuchtung nach einem beliebigen der Ansprüche 1-7, wobei das Aufrauen auf der Oberflächenschicht des coextrudierten Materials durch geeignete Mattierungs- oder Glanzregulierungsmittel bewirkt wird.

8. Beleuchtungsvorrichtung mit Kantenbeleuchtung nach einem beliebigen der Ansprüche 1-8, wobei das Übertragungselement zwischen 100 mm und 3000 mm lang in der Abmessung senkrecht zu oder weg von der Lichtquellenkante ist.

9. Beleuchtungsvorrichtung mit Kantenbeleuchtung nach einem beliebigen der Ansprüche 1-9, wobei die lokalisierten Schwankungen im Oberflächenrauheits(Ra)wert zwischen 0,01 µm bis 1,0 µm liegen.

## Revendications

1. Dispositif d'éclairage éclairé par la tranche comprenant au moins une source de lumière (13, 14) ;
un élément de transmission de lumière (10) ayant au moins une surface de sortie de lumière (12) et au moins un bord d'entrée de la lumière sensiblement perpendiculaire à ladite surface (12), la source de lumière (13, 14) étant située à proximité immédiate dudit bord d'entrée de lumière de sorte que la lumière provenant de la source de lumière (13,14) pénètre dans l'élément de transmission (10) par l'intermédiaire dudit bord et se propage à travers l'élément (10), ladite au moins une surface de sortie de lumière (12) étant uniformément dépolie sur toute la surface de sortie (12), dans lequel l'élément de transmission (10) maintient une épaisseur sensiblement uniforme lorsque la distance croît par rapport à la source de lumière (13, 14), dans lequel l'élément de transmission (10) conjointement avec la surface rugueuse (12) est créé par un procédé choisi parmi la polymérisation par coulée, le moulage, l'extrusion et le gaufrage, et la co-extrusion **caractérisé en ce que** le dépolissage est suffisamment fin pour donner une valeur Ra moyenne sur toute la surface (12) de moins de 1,0 µm/mm d'épaisseur de l'élément (10) et dans la gamme de 0,01 à 1,0 µm/mm d'épaisseur de l'élément (10).

2. Dispositif d'éclairage éclairé par la tranche selon la revendication 1, dans lequel la valeur Ra moyenne sur toute la surface de sortie de l'élément de transmission est inférieure à 0,75 µm/mm d'épaisseur.

3. Dispositif d'éclairage éclairé par la tranche selon l'une quelconque des revendications 1 à 3, dans lequel l'élément de transmission est une feuille et dans lequel une rugosité est appliquée à la fois à une première surface de sortie de lumière et à une seconde surface de sortie de lumière qui peut être espacée de la première surface et opposée à celle-ci sur la face opposée de la feuille, la valeur Ra/mm étant dans ce cas considérée comme étant la somme des deux valeurs Ra moyennes divisée par l'épaisseur totale de la feuille.

4. Dispositif d'éclairage éclairé par la tranche selon l'une quelconque des revendications 1 à 4, dans lequel une pluralité de feuilles présentent une relation superposée et le dépolissage peut être appliqué aux faces extérieures des feuilles superposées, aux faces intérieures correspondantes ou à toute combinaison de faces intérieures et de faces extérieures.

5. Dispositif d'éclairage éclairé par la tranche selon l'une quelconque des revendications 1 à 5, dans lequel l'élément de transmission a une longueur inférieure à 3000 mm suivant la dimension perpendiculaire au bord de la source de lumière ou s'éloignant de celle-ci.

6. Dispositif d'éclairage éclairé par la tranche selon l'une quelconque des revendications 1 à 6, dans lequel l'élément de transmission a une épaisseur inférieure à 100 mm.

7. Dispositif d'éclairage éclairé par la tranche selon l'une quelconque des revendications 1 à 7, dans lequel le dépolissage effectué sur la couche de surface du matériau co-extrudé est réalisé par des agents de régulation de matité ou de brillance appropriés.

8. Dispositif d'éclairage éclairé par la tranche selon l'une quelconque des revendications 1 à 8, dans lequel l'élément de transmission a une longueur comprise entre 100 mm et 3000 mm suivant la dimension perpendiculaire au bord de la source de lumière ou s'éloignant de celle-ci.

9. Dispositif d'éclairage éclairé par la tranche selon l'une quelconque des revendications 1 à 9, dans lequel la fluctuation localisée de la valeur Ra de surface est comprise entre 0,01 µm et 1,0 µm.
